# EUROPÄISCHE PATENTSCHRIFT

(11) **EP 0 799 391 B1**
(45) Veröffentlichungstag und Bekanntmachung des Hinweises auf die Patenterteilung: **08.04.1998**
(21) Anmeldenummer: 95942666.9
(22) Anmeldetag: 14.12.1995
(51) Int. Cl.: F16D 69/00, C08J 5/14

(54) **VERFAHREN UND VORRICHTUNG ZUR THERMISCHEN BEHANDLUNG VON REIBBELAGOBERFLÄCHEN**
THERMAL TREATMENT PROCESS AND DEVICE FOR FRICTION LINING SURFACES
PROCEDE ET DISPOSITIF DE TRAITEMENT THERMIQUE DE LA SURFACE DE GARNITURES DE FRICTION

(30) Priorität: 22.12.1994 DE 4445882
(43) Veröffentlichungstag der Anmeldung: 08.10.1997
(73) Patentinhaber: Rütgers Automotive Aktiengesellschaft, 45356 Essen (DE)
(72) Erfinder: ZIMMER, Thomas, D-45138 Essen (DE); LAUTH, Oliver, D-45145 Essen (DE); JENNIGES, Norbert, D-45479 Mülheim (DE); STEINKÄMPER, Ulrich, D-45355 Essen (DE)
(74) Vertreter: Schmidt, Frank-Michael
(86) Internationale Anmeldenummer: EP9504957
(87) Internationale Veröffentlichungsnummer: WO9619680

(56) Entgegenhaltungen:
- WO-A-94/02754
- DE-A- 4 032 182

## Beschreibung

Die Erfindung betrifft ein Verfahren zur thermischen Behandlung von Oberflächen von Reibbelägen durch Anpressen an eine beheizte Platte in einer Scorchpresse und eine Scorchpresse zur Durchführung dieses Verfahrens.

Reibbeläge, insbesondere organisch gebundene Reibbeläge sind heute häufig einer hohen thermischen Belastung ausgesetzt. Da sie bereits beim ersten Bremsvorgang eine hohe Bremskraft erzeugen sollen, wird die Reibfläche zur Vermeidung des Greenfadings durch Anpressen an eine heiße Platte (Scorchen) oder mit einer Gasflamme oder dergleichen thermisch behandelt (DE-A 40 32 182). Dabei werden die Zersetzungsprodukte des organischen Bindemittels im oberflächennahen Bereich entfernt, die für den Reibwertabfall verantwortlich sind.

Beim Scorchen werden z.B. 20 geschliffene und nachgehärtete Reibbeläge gleichzeitig gegen eine bis zu 750°C heiße Platte gepreßt.

Der Aufheizvorgang kann mehrmals durch Lüften unterbrochen werden, um das Entfernen der Zersetzungsprodukte zu erleichtern. Anschließend werden die Beläge durch Aufpressen einer Kühlplatte abgekühlt. Danach werden die Rückenplatten der Reibbeläge in der Regel gereinigt und beschichtet.

Nachteilig an dem bekannten Verfahren ist, daß die Reibfläche bereits beim ersten Anpressen an die Heizplatte mit der Maximaltemperatur beaufschlagt wird. Dadurch kann es zu einer Versiegelung der Oberfläche kommen, die den Austritt der Zersetzungsprodukte verhindert. Außerdem läßt sich die Temperatur der Heizplatte nur sehr schwer über die Gesamtfläche konstanthalten. Temperaturabweichungen von 15 K und mehr sind durchaus üblich. Dadurch können die Reibbeläge einer Scorchcharge einen unterschiedlichen Abrieb oder Reibwert aufweisen.

Die Behandlungszeit beim Scorchen ist natürlich von Form und Material des Reibbelages abhängig. Dadurch ist es praktisch unmöglich, den bekannten Scorchprozeß in ein kontinuierliches Herstellungsverfahren zu integrieren.

Es bestand daher die Aufgabe, eine kontinuierliche thermische Behandlung von Reibbelagoberflächen zu ermöglichen, bei der alle Reibbeläge mit vorgegebenen Taktzeiten unter gleichen Bedingungen behandelt werden.

Die Aufgabe wird dadurch gelöst, daß die Reibbeläge nach dem Aushärten ohne nennenswerte Abkühlung direkt der Scorchpresse zugeführt werden, daß die Reibbeläge in der Scorchpresse in mehreren Stufen behandelt werden, wobei jede Behandlungsstufe eine Taktzeit andauert und eine Transportphase und eine Anpreßphase enthält, wobei die Oberfläche der Reibbeläge in der Anpreßphase an jeweils eine thermisch wirksame Platte angepreßt wird und wobei die Reibbeläge in einer ersten Anpreßphase an eine bis zu 900°C heiße Heizplatte und in einer nachgeschalteten Anpreßphase an eine Kühlplatte angepreßt werden.

Vorzugsweise werden die Reibbeläge mit einer Anpreßkraft von 50 bis 5000 daN angepreßt. Höhere Anpreßkräfte verbessern den Wärmeübergang nicht mehr, während bei niedrigeren Anpreßkräften ein verschlechterter Wärmeübergang in Kauf genommen werden muß. Die Transportphase entspricht der Lüftungsphase bei dem bekannten Prozeß.

Da die einzelnen Wärmebehandlungs- und Kühlstufen in verschiedenen Modulen der Scorchpresse durchgeführt werden, kann die Temperatur jeder thermisch wirksamen Platte und die Anpreßkraft in jeder Stufe in Abhängigkeit von der Form der Beläge und der Zusammensetzung der Reibmasse optimal eingestellt werden. Dabei kann die Reibfläche in jeder Stufe auf die Temperatur der Heiz- oder Kühlplatte erhitzt, bzw. abgekühlt werden. So läßt sich der gesamte zeitliche Temperaturverlauf an der Reibfläche steuern und ein Versiegeln verhindern. Außerdem wird durch diese Temperaturregelung Energie eingespart. Durch die Aufteilung in verschiedene Heizmodule ist es auch einfacher, die Oberflächentemperatur über die gesamte Heizplatte konstant zu halten, so daß die Abweichungen maximal 1 K betragen.

Die Taktzeit beträgt in der Regel 3 bis 60 s. Auf die Transportphase entfallen dabei 0,5 bis 2 s und auf die Anpreßphase 1 bis 59,5 s. Bei optimaler Fahrweise wird die Solltemperatur in der Anpreßphase nach 1 bis 5 s an der Reibfläche erreicht.

Die gesamte Behandlungszeit in der Scorchpresse wird bei konstanten Taktzeiten durch die Anzahl der Anpreßphasen gegen Heizplatten und die Anzahl der Anpreßphasen gegen Kühlplatten bestimmt, die variabel ist und für jeden Belag festgelegt wird. Im allgemeinen sind für PKW-Scheibenbremsbeläge fünf Wärmebehandlungs- und zwei Kühlstufen ausreichend.

Ferner wird die Aufgabe gelöst durch eine Scorchpresse mit mehreren Modulen, die jeweils ein Aggregat aus einer aus einem Heizaggregat und einem Kühlaggregat bestehenden Gruppe aufweisen, mit einer gegen die Aggregate bewegbaren Anpreßvorrichtung, die eine Druckplatte aufweist, wobei jeweils auf der der Anpreßvorrichtung zugewandten Seite der Aggregate eine thermisch wirksame Fläche vorgesehen ist, mit einer Absaugvorrichtung, einer Fördereinrichtung zum Positionieren der Reibbeläge jeweils zwischen der thermisch wirksamen Fläche der Aggregate und der Druckplatte der Anpreßvorrichtung, mit einer Regelung für die Heizaggregate und einer Steuerung für die Fördereinrichtung und die Anpreßvorrichtung.

Eine bevorzugte Ausführungsform ist dadurch gekennzeichnet, daß jedem Modul eine separate Anpreßvorrichtung zugeordnet ist.

Vorteilhafterweise ist jedem Modul eine separate Absaugvorrichtung zugeordnet.

Vorzugsweise sind die Heiz- und Kühlaggregate gegeneinander austauschbar. Auf diese Weise kann die Scorchpresse ohne große technischen Aufwand für die Behandlung von Reibbelägen anderer Form oder Zusammensetzung umgerüstet werden, die eine andere Anzahl von Kühl- oder Wärmebehandlungsstufen erfordern. Für Wartungs- und Reparaturarbeiten können die einzelnen Aggregate problemlos ausgebaut werden.

Damit die gasförmigen Zersetzungsprodukte schnell von den thermisch wirksamen Flächen, insbesondere den Heizflächen entfernt werden können, ist es sinnvoll, die thermisch wirksamen Flächen der Aggregate und damit auch die Druckplatten vertikal anzuordnen und die Zersetzungsprodukte oberhalb des so gebildeten Spaltes abzusaugen. Dadurch wird die Bildung einer den Wärmeübergang behindernden Kohlenstoffschicht auf der Heizfläche verhindert. Die thermisch wirksamen Flächen, insbesondere die Heizflächen müssen so ausgebildet sein, daß die Beläge beim Scorchen nicht darauf festbacken. Dies kann beispielsweise durch eine Beschichtung aus Wolframcarbid erreicht werden.

Die Beheizung des Heizaggregats erfolgt mittels Hochleistungsheizpatronen, deren Lebensdauer bei der hohen thermischen Belastung von einer ungehinderten Wärmeabfuhr abhängig ist. Um einerseits einen festen Sitz der Patronen im Heizblock zu erreichen und andererseits auch ein schnelles Auswechseln zu ermöglichen, ist der Heizblock in der Ebene, die durch die Achsen der Heizpatronen geht, geteilt, wobei beide Teile elastisch gegeneinander gepreßt werden.

Die Druckkräfte werden dabei zweckmäßigerweise mittels Blöcken aus Hartkeramik auf einen Stahlrahmen übertragen. Zwischen Heizblock und Rahmen ist eine anorganische Wärmedämmung angeordnet, um die Wärmeverluste gering zu halten und die die Temperaturregelung beeinträchtigenden Umgebungseinflüsse auszuschalten.

Da die verschiedenen Reibbelagtypen unterschiedliche Dicken haben, aber die Bewegungszeit für die Druckplatte möglichst kurz sein soll, ist es sinnvoll, den Hub der Platte klein zu halten. Dies wurde durch leicht auswechselbare Druckplatten unterschiedlicher Dicke gelöst, so daß ein konstanter Hub auch bei unterschiedlichen Reibbelagdicken eingehalten werden kann.

Eine bevorzugte Ausführungsform ist dadurch gekennzeichnet, daß die Druckplatte kühlbar ist. Auf diese Weise wird verhindert, daß sich die Druckplatte aufgrund eines geringen Abstandes von einer Heizfläche erwärmt.

Die Fördereinrichtung muß die Reibbeläge im Takt während der Transportphase von einem Modul zum nächsten fördern. Das kann beispielsweise mit einer absatzweise arbeitenden Förderkette geschehen, auf der entsprechende Mitnehmer zur Aufnahme der Reibbeläge angeordnet sind. Wegen der hohen Temperatur und dem geringen Abstand zwischen Heizfläche und Druckplatte ist es vorteilhaft, die Fördervorrichtung während der Anpreßphase aus dem Spalt zwischen Heiz- bzw. Kühlfläche und Druckplatte herauszufahren, so daß die Reibbeläge nur durch die Anpreßkraft gehalten werden.

Eine solche Vorrichtung kann beispielsweise aus einem Flachstahl mit Aussparungen zur Aufnahme der Reibbeläge bestehen, der im Spalt horizontal und vertikal bewegbar ist.

Vorteilhafte Weiterbildungen sind in den Unteransprüchen gekennzeichnet.

Im folgenden wird die Erfindung anhand der Zeichnungen beispielhaft erläutert:

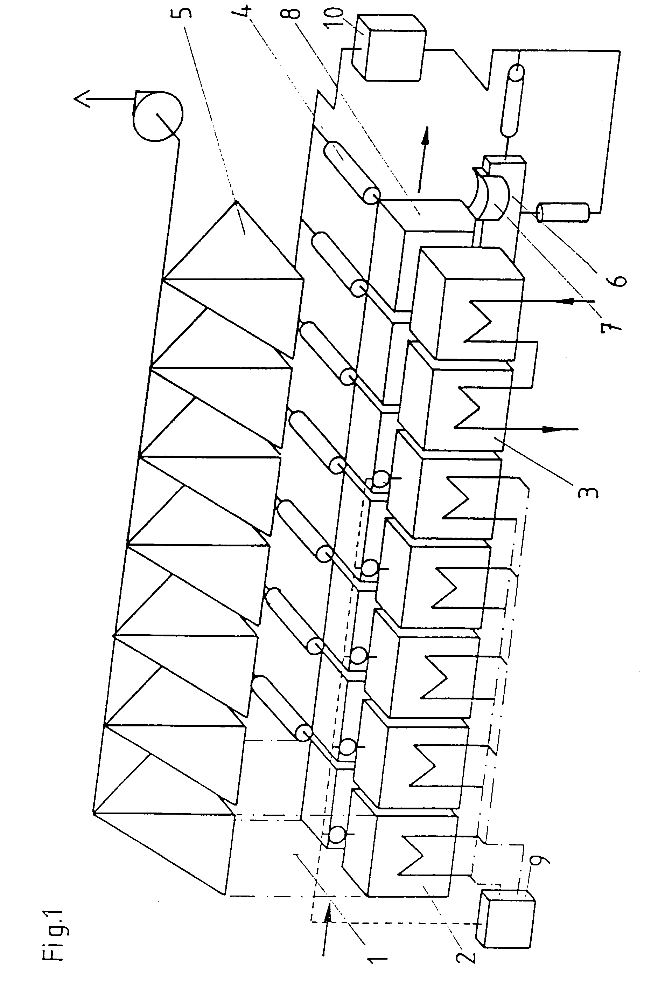

- Fig. 1: zeigt das Verfahrensprinzip der Scorchpresse und
- Fig. 2: einen Schnitt durch das Heizaggregat und den angrenzenden Bereich der Anpreßvorrichtung.

Die aus dem Härteofen kommenden Reibbeläge 7 werden einzeln im Abstand von 10 s senkrecht in die Aussparungen des Flachstahls 6 eingelegt. Zunächst wird der Flachstahl 6 angehoben, bis die zwischen Druckplatte 8 und den Aggregaten 2 bzw. 3 eingeklemmten Reibbeläge 7 in seinen Ausnehmungen liegen. Dann wird die Druckplatte 8 von der Anpreßvorrichtung 4 zurückgezogen und der Flachstahl 6 in Pfeilrichtung bewegt, bis die Reibbeläge 7 ihre Position im jeweils folgenden Modul 1 erreicht haben. Die Reibbeläge werden nun von der Druckplatte 8 mit einer Kraft von 50 - 5000 daN mit ihren Reibflächen gegen die Heiz- oder Kühlflächen der Aggregate 2 bzw. 3 gepreßt und der Flachstahl nach unten aus dem Heizbereich herausgezogen.

Der Transportvorgang vom Lösen der Beläge 7 bis zum Wiederanpressen dauert etwa 2 s. Dabei werden die Beläge 7 gelüftet, so daß die gasförmigen Zersetzungsprodukte über die Absaugvorrichtung 5 aus dem beheizten Modul 1 entfernt werden können. Die Bewegung des Flachstahls 6 und der Anpreßvorrichtung 4 wird über die Steuerung 10 in ihrem Zeitablauf geregelt. Der Antrieb erfolgt beispielsweise über Pneumatikzylinder. Während des Heiz- bzw. Kühlvorgangs wird der Flachstahl 6 entgegen der Pfeilrichtung wieder in seine Ausgangsposition bewegt.

Die Scorchpresse besteht aus sieben Modulen 1. Die ersten fünf sind mit Heizaggregaten 2 und die restlichen zwei mit Kühlaggregaten 3 ausgestattet. Die Temperaturregelung der Heizaggregate 2 erfolgt über den Regler 9. Sie ist so ausgelegt, daß die Endtemperatur jeder Stufe in etwa 5 s erreicht und danach 3 s gehalten wird. Auf diese Weise ist sichergestellt, daß die Reibfläche auf die jeweilige Temperatur aufgeheizt wird. In der ersten Stufe beträgt in diesem Fall die Endtemperatur 350°C, in der zweiten Stufe 500°C, in der dritten Stufe 600°C, in der vierten Stufe 700°C und in der fünften Stufe 750°C. Die Abkühlung erfolgt in der sechsten Stufe auf 350°C und in der siebten Stufe auf 100°C. Die Temperaturen in den Heizstufen sind je nach Belag einstellbar. Bei den Kühlstufen kann die Kühlmittelmenge über die Solltemperatur oder die Endtemperatur geregelt werden. Heiz- 2 und Kühlaggregat 3 sind gegeneinander austauschbar.

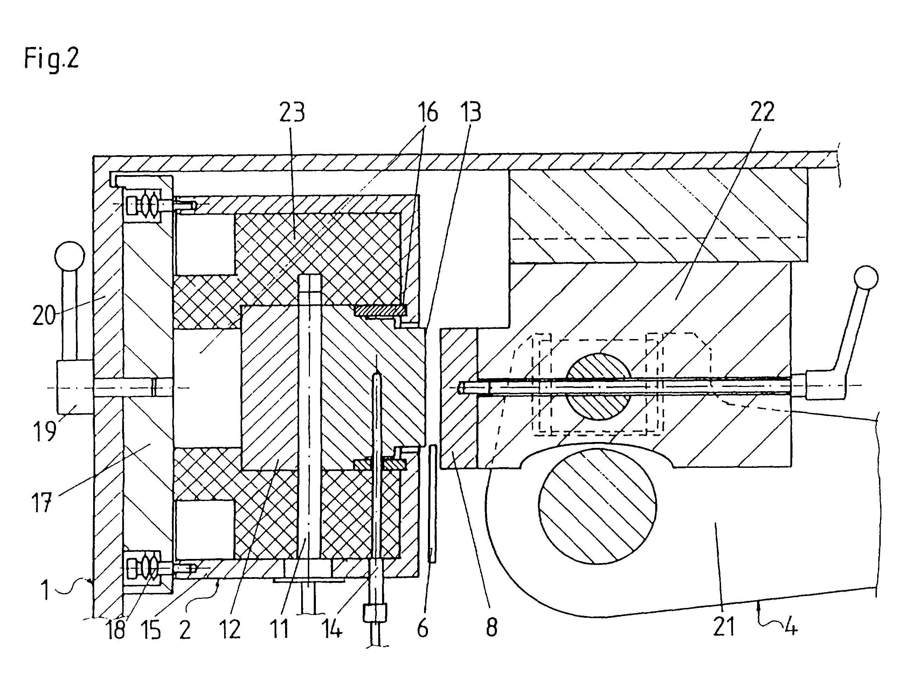

Da für die Temperaturkonstanz über die gesamte Heizfläche, sowie die Lebensdauer der Heizpatronen 11 und die Aufheizgeschwindigkeit die Konstruktion des Heizaggregates 2 von entscheidender Bedeutung ist, wird dessen Aufbau anhand der Fig. 2 näher erläutert. Die elektrischen Heizpatronen 11 sind von einem Stahlblock 12 umschlossen, der in der Ebene der Achsen der Heizpatronen 11 geteilt ist. Der Block 12 ist von einer keramischen Isoliermasse 23 umgeben mit Ausnahme der Heizfläche 13.

Außerdem ist er im Bereich der Heizfläche 13 mit einem Temperaturmeßfühler 14 versehen. Der isolierte Block 12 ist in einem Gehäuse 15 eingebaut, aus dem die Heizfläche 13 herausragt. Der Block 12 stützt sich über Hartkeramikplatten 16 an der Gehäuseinnenwandung und der Gehäuserückenplatte 17 ab, die über Federn 18 mit dem Gehäuse 15 verschraubt ist. Durch die Federn 18 wird eine ausreichende Ausgangszugspannung und die Möglichkeit einer thermischen Ausdehnung erreicht.

Das ganze Heizaggregat 2 ist leicht lösbar mittels einer Griffschraube 19 mit dem Modulrahmen 20 verbunden. Bei der Anpreßvorrichtung 4 wird der Winkelhebel 21 pneumatisch bewegt und greift in einen horizontal geführten Druckblock 22 ein, der stirnseitig mit der auswechselbaren Druckplatte 8 versehen ist.

## Patentansprüche

1. Verfahren zur thermischen Behandlung von Oberflächen von Reibbelägen (7) durch Anpressen an eine beheizte Platte (2) in einer Scorchpresse,
dadurch gekennzeichnet,
daß die Reibbeläge (7) nach dem Aushärten ohne nennenswerte Abkühlung direkt der Scorchpresse zugeführt werden,
daß die Reibbeläge (7) in der Scorchpresse in mehreren Stufen behandelt werden,
wobei jede Behandlungsstufe eine Taktzeit andauert und eine Transportphase und eine Anpreßphase enthält,
wobei die Oberfläche der Reibbeläge in der Anpreßphase an jeweils eine thermisch wirksame Platte (2,3) angepreßt wird und
wobei die Reibbeläge in einer ersten Anpreßphase an eine bis zu 900°C heiße Heizplatte und in einer nachgeschalteten Anpreßphase an eine Kühlplatte angepreßt werden.

2. Verfahren nach Anpruch 1, dadurch gekennzeichnet, daß die Reibbeläge (7) mit einer Anpreßkraft von 50 bis 5000 daN angepreßt werden.

3. Verfahren nach Anspruch 1 oder 2, dadurch gekennzeichnet, daß die Temperatur jeder thermisch wirksamen Platte (2,3) separat einstellbar ist.

4. Verfahren nach einem der Anprüche 1 bis 3, dadurch gekennzeichnet, daß die Taktzeit 3 bis 60 sec beträgt.

5. Verfahren nach einem der Ansprüche 1 bis 4, dadurch gekennzeichnet, daß die Anzahl der Anpreßphasen gegen Heizplatten (2) und die Anzahl der Anpreßphasen gegen Kühlplatten (3) variabel ist.

6. Scorchpresse zur Durchführung des Verfahrens nach einem der Ansprüche 1 bis 5,
gekennzeichnet durch
mehrere Module (1), die jeweils ein Aggregat aus einer aus einem Heizaggregat (2) und einem Kühlaggregat (3) bestehenden Gruppe aufweisen,
eine gegen die Aggregate bewegbare Anpreßvorrichtung (4), die eine Druckplatte (8) aufweist,
wobei jeweils auf der der Anpreßvorrichtung (4) zugewandten Seite der Aggregate (2, 3) eine thermisch wirksame Fläche (13) vorgesehen ist,
eine Absaugvorrichtung (5),
eine Fördereinrichtung (6), zum Positionieren der Reibbeläge jeweils zwischen der thermisch wirksamen Fläche der Aggregate (2, 3) und der Druckplatte (8) der Anpreßvorrichtung (4),
eine Regelung (9) für die Heizaggregate (2) und
eine Steuerung (10) für die Fördereinrichtung (6) und die Anpreßvorrichtung (4).

7. Scorchpresse nach Anspruch 6, dadurch gekennzeichnet, daß jedem Modul eine separate Anpreßvorrichtung (4) zugeordnet ist.

8. Scorchpresse nach Anspruch 6 oder 7, dadurch gekennzeichnet, daß jedem Modul (1) eine separate Absaugvorrichtung (5) zugeordnet ist.

9. Scorchpresse nach einem der Ansprüche 6 bis 8, dadurch gekennzeichnet, daß Heiz- und Kühlaggregate (2, 3) gegeneinander austauschbar sind.

10. Scorchpresse nach einem der Ansprüche 6 bis 9, dadurch gekennzeichnet, daß die thermisch wirksamen Fläche (13) der Aggregate (2, 3) vertikal angeordnet sind.

11. Scorchpresse nach einem der Ansprüche 6 bis 10, dadurch gekennzeichnet, daß das Heizaggregat (2) von einem Gehäuse (15) umgeben ist und Heizpatronen (11) enthält, die in einen die thermisch wirksame Fläche (13) aufweisenden Block (12) eingebaut sind, wobei der Block (12) in der Ebene der Achsen der Heizpatronen (11) geteilt ist und mit Ausnahme der thermisch wirksamen Fläche (13) von einer keramischen Isoliermasse (23) umgeben ist und sich über Hartkeramikplatten (16) an dem Gehäuse (15) abstützt.

12. Scorchpresse nach einem der Ansprüche 6 bis 11, dadurch gekennzeichnet, daß die thermisch wirksame Fläche (13) mit Wolframcarbid beschichtet ist.

13. Scorchpresse nach einem der Ansprüche 6 bis 12, dadurch gekennzeichnet, daß die Druckplatte (8) austauschbar ist.

14. Scorchpresse nach einem der Ansprüche 6 bis 13, dadurch gekennzeichnet, daß die Druckplatte (8) kühlbar ist.

15. Scorchpresse nach einem der Ansprüche 6 bis 14, dadurch gekennzeichnet, daß die Kühlaggregate (3) mit einer Regelung für die Kühlmittelmenge versehen sind.

## Claims

1. Method of thermally treating surfaces of friction linings (7) by pressing them against a heated plate (2) in a scorch press, characterised in that the friction linings (7) are supplied after hardening directly to the scorch press without significant cooling, that the friction linings (7) are treated in the scorch press in a number of stages, each treatment stage lasting a cycle period and including a transport phase and a pressing phase, the surface of the friction linings being pressed in the pressing phase against a respective thermally operative plate (2, 3) and the friction linings being pressed in a first pressing phase against a hot heating plate at up to 900°C and, in a subsequent pressing phase, against a cooling plate.

2. Method as claimed in Claim 1, characterised in that the friction linings (7) are pressed with a pressing force of 50-5000 daN.

3. Method as claimed in Claim 1 or 2, characterised in that the temperature of each thermally operative plate (2, 3) is separately adjustable.

4. Method as claimed in one of Claims 1 to 3, characterised in that the cycle period is 3 to 60 sec.

5. Method as claimed in one of Claims 1 to 4, characterised in that the number of the pressing phases against heating plates (2) and the number of the pressing phases against cooling plates (3) is variable.

6. Scorch press for carrying out the method as claimed in one of Claims 1 to 5, characterised by a plurality of modules (1) which each have a set consisting of a group comprising a heating unit (2) and a cooling unit (3), a pressing device (4), which is movable towards the units and which has a pressure plate (8), a respective thermally operative surface (13) being provided on the side of the units (2, 3) directed towards the pressing device (4), a suction device (5), a conveying device (6) for positioning the friction linings between the thermally operative surface of the units (2, 3) and the pressure plate (8) of the pressing device (4), a controller (9) for the heating units (2) and a controller (10) for the conveying device (6) and the pressing device (4).

7. Scorch press as claimed in Claim 6, characterised in that a separate pressing device (4) is associated with each module.

8. Scorch press as claimed in Claim 6 or 7, characterised in that a separate suction device (5) is associated with each module (1).

9. Scorch press as claimed in one of Claims 6 to 8, characterised in that the heating and cooling units (2, 3) are interchangeable.

10. Scorch press as claimed in one of Claims 6 to 9, characterised in that the thermally operative surfaces (13) of the units (2, 3) are vertically arranged.

11. Scorch press as claimed in one of Claims 6 to 10, characterised in that the heating unit (2) is surrounded by a housing (15) and includes heating dies (11), which are installed in a block (12) having the thermally operative surface (13), the block (12) being divided in the plane of the axes of the heating dies (11) and being surrounded, with the exception of the thermally operative surface (13), by a ceramic insulating composition (23) and bearing via hard ceramic plates (16) on the housing (15).

12. Scorch press as claimed in one of Claims 6 to 11, characterised in that the thermally operative surface (13) is coated with tungsten carbide.

13. Scorch press as claimed in one of Claims 6 to 12, characterised in that the pressure plate (8) is replaceable.

14. Scorch press as claimed in one of Claims 6 to 13, characterised in that the pressure plate (8) is coolable.

15. Scorch press as claimed in one of Claims 6 to 14, characterised in that the cooling units (3) are provided with a controller for the amount of refrigerant.

## Revendications

1. Procédé de traitement thermique de surfaces de garnitures de friction (7) par pressage contre une plaque chauffée (2) dans une presse de cuisson,
caractérisé par le fait
que les garnitures de friction (7) sont, après le durcissement, conduites directement, sans refroidissement notable, à la presse de cuisson,
que les garnitures de friction (7) sont traitées en plusieurs étapes dans la presse de cuisson,
chaque étape de traitement durant un temps de cycle et contenant une phase de transport et une phase de pressage,
la surface de chaque garniture de friction étant, dans la phase de pressage, pressée contre une plaque à action thermique (2, 3) et
les garnitures de friction étant, dans une première phase de pressage, pressées contre une plaque chauffante ayant une température pouvant aller jusqu'à 900 °C et, dans une phase suivante de pressage, pressées contre une plaque de refroidissement.

2. Procédé selon la revendication 1, caractérisé par le fait que les garnitures de friction (7) sont pressées avec une force de pressage de 50 à 5000 daN.

3. Procédé selon l'une des revendications 1 et 2, caractérisé par le fait que la température de chaque plaque à action thermique (2, 3) est réglable séparément.

4. Procédé selon l'une des revendications 1 à 3, caractérisé par le fait que le temps de cycle est de 3 à 60 secondes.

5. Procédé selon l'une des revendications 1 à 4, caractérisé par le fait que le nombre de phases de pressage contre des plaques chauffantes (2) et le nombre de phases de pressage contre des plaques de refroidissement (3) sont variables.

6. Presse de cuisson pour la mise en oeuvre du procédé selon l'une des revendications 1 à 5,
caractérisée par
plusieurs modules (1) qui présentent chacun un bloc formé d'un groupe constitué d'un bloc de chauffage (2) et d'un bloc de refroidissement (3),
un dispositif de pressage (4) mobile vers les blocs qui présente une plaque de pression (8),
sur le côté de chacun des blocs (2, 3) dirigé vers le dispositif de pressage (4) étant prévue une surface à action thermique (13),
un dispositif d'aspiration (5),
un dispositif de transport (6) pour le positionnement des garnitures de friction entre la surface à action thermique des blocs (2, 3) et la plaque de pression (8) du dispositif de pressage (4),
une régulation (9) pour les blocs de chauffage (2) et
une commande (10) pour le dispositif de transport (6) et le dispositif de pressage (4).

7. Presse de cuisson selon la revendication 6, caractérisée par le fait qu'à chaque module est adjoint un dispositif de pressage (4) séparé.

8. Presse de cuisson selon l'une des revendications 6 et 7, caractérisée par le fait qu'à chaque module (1) est adjoint un dispositif d'aspiration (5) séparé.

9. Presse de cuisson selon l'une des revendications 6 à 8, caractérisée par le fait que les blocs de chauffage et de refroidissement (2, 3) sont interchangeables.

10. Presse de cuisson selon l'une des revendications 6 à 9, caractérisée par le fait que la surface à action thermique (13) des blocs (2, 3) est placée verticalement.

11. Presse de cuisson selon l'une des revendications 6 à 10, caractérisée par le fait que le bloc de chauffage (2) est entouré d'une enveloppe (15) et contient des cartouches chauffantes (11) qui sont montées dans un bloc (12) présentant la surface à action thermique (13), ce bloc (12) étant divisé dans le plan des axes des cartouches chauffantes (11) et entouré, à l'exception de la surface à action thermique (13), d'une masse isolante céramique (23), et s'appuyant sur l'enveloppe (15) par des plaques en céramique dure (16).

12. Presse de cuisson selon l'une des revendications 6 à 11, caractérisée par le fait que la surface à action thermique (13) est revêtue de carbure de tungstène.

13. Presse de cuisson selon l'une des revendications 6 à 12, caractérisée par le fait que la plaque de pression (8) est changeable.

14. Presse de cuisson selon l'une des revendications 6 à 13, caractérisée par le fait que la plaque de pression (8) peut être refroidie.

15. Presse de cuisson selon l'une des revendications 6 à 14, caractérisée par le fait que les blocs de refroidissement (3) sont pourvus d'une régulation du débit de fluide de refroidissement.
